# EUROPEAN PATENT SPECIFICATION

(11) **EP 3 627 061 B1**
(45) Date of publication and mention of the grant of the patent: **11.01.2023**
(21) Application number: 19198822.9
(22) Date of filing: 21.09.2019
(51) Int. Cl.: F24F 7/00, F24F 12/00, F24F 13/30, F24F 5/00

(54) **VENTILATION UNIT**
LÜFTUNGSEINHEIT
UNITÉ DE VENTILATION

(30) Priority: 21.09.2018 CZ 20180494
(43) Date of publication of application: 25.03.2020
(73) Proprietor: Ceské vysoké ucení technické v Praze, 16000 Praha 6- Dejvice (CZ)
(72) Inventor: VCELAK, Jan, 27201 Kladno - Krocehlavy (CZ); MAZANEC, Vojtech, 25229 Dobrichovice (CZ); MLEJNEK, Pavel, 27341 Trebusice (CZ); VODICKA, Ales, 25070 Odolena Voda - Dolinek (CZ); KNY, Martin, 14900 Praha 4 - Haje (CZ); ADAMOVSKY, Daniel, 27354 Lidice (CZ)
(74) Representative: Kratochvil, Vaclav

(56) References cited:
- WO-A1-02/055939
- DE-C2- 19 903 280
- US-A- 5 890 371
- US-A1- 2011 185 752

## Description

### Technical field

The invention relates to a ventilation unit with the function of cooling/heating of ventilated spaces using a combined heat exchanger consisting of a passive counterflow part and an active part using thermoelectric modules. The said unit can not only provide space ventilation, but also provide space heating or cooling.

### State of Art

Modern low-energy buildings require technology that makes it possible to efficiently use energy from renewable sources, while at the same time provide users with increased comfort and higher indoor quality environment. The basic technical equipment of buildings unquestionably includes systems for heating, cooling and fresh air supply. These technologies ensure a high-quality indoor environment in residential, office and public buildings. Energy saving requirements in buildings put high demands on technologies used for active air handling. Centralized air exchange units with heat recovery are nowadays a relatively common part of both office and residential buildings. In some cases, these centralized systems are also equipped with a heater or cooler. Smaller decentralized units are primarily designed for ventilation of individual rooms and the option of heating and even more of cooling, is missing completely.

Energy savings requirements need that at least part of the energy is covered from locally installed renewable energy sources. Photovoltaic panels are the most commonly installed and also the most accessible renewable source. Unfortunately, they are not suitable for covering heating energy requirements due to low solar gains during winter and in transition periods (spring, autumn). On the other hand, electricity generated in the summer does not have a defined use, except for hot water preparation, and in many cases it is not effectively used in buildings where it is produced but feeds the distribution grid.

At present, heat pumps already exist with the possibility of controlling the production of cold depending on the electrical output of the connected photovoltaic system. Such complex systems, however, are not easily installable in any building and the investment costs are high. Moreover, their service life is limited due to the mechanical components used and their loading.

Direct heat or cold production combined with forced air exchange is an ideal combination for smaller buildings, where a central system installation is not economically sensible, or for older buildings where a central system installation is not possible or the investments are too high.

Thermoelectric modules offer the possibility of local production of cold or heat. The big advantage is that the thermoelectric modules do not use any mechanical components - compressor and compressed media circuit - to produce heat and cold, and therefore do not exhibit any mechanical wear. The thermoelectric cell utilizes the Peltier effect, where passing electrical current through two conductors connected in series (or semiconductors) of different materials, cools one contact surface and heats the other. This can be used to produce heat or cold. Even though the production of cold in this way does not excel in its efficiency, it is usable, and its great advantage is the possibility to combine it with forced air exchange or power supply from photovoltaic systems. The possibility of continuous regulation of the power of thermoelectric cells is a huge advantage of the proposed solution in association with photovoltaic systems. The power of such a ventilation unit can be regulated based on the actual production of energy from a renewable source such as, for example, a photovoltaic system. The concurrent requirement for cooling with the actual energy production from the photovoltaic system is ideal and therefore the system can be used effectively in the summer season to produce cold and simultaneously supply the fresh air for the space.

The idea of using the Peltier effect to cool or heat residential or other premises is quite old, as evidenced by the number and age of patented solutions.

Patent US3552133A - Heating and Cooling Unit (1968) describes an active thermal counterflow air exchanger utilizing as the active part a semiconductor thermoelectric generator. The authors describe the advantages of using a counterflow heat exchanger as well as the possibility of reversing the current by semiconductor elements for generating both heat and cold. Compared to the present solution, however, the passive exchanger part, which greatly increases the efficiency of the whole device and ensures heat exchange without the need to supply electrical energy to the thermoelectric modules, is entirely missing.

Patent application US5282364A - Device in the thermoelectric heaters/coolers presents an assembly of devices for heating or cooling utilizing the Peltier element with an adjacent metal block for cooling or heating, and heat or cold dissipation using an air heat exchanger. The presented unit consists of two chambers separated by a separation partition with a thermoelectric cell, where the air is heated or cooled as required. The presented unit is not designed to ventilate spaces or to recover heat from the exhaust air. There is no combination of passive and active air exchanger, which has a positive effect on the overall heat exchange efficiency.

Patent application US4463569A - Solid-state heating and cooling apparatus presents a device for controlling temperature in rooms with the possibility of cooling or heating a single enclosed space. The air does not leave the room in which the temperature is regulated, and therefore it is not a forced air exchange unit, and therefore there is no passive exchanger here, only an active air heat exchanger that uses a thermoelectric cell.

Patent DE19903280C2 - Ventilation unit describes a device having some identical elements with the present invention. The device described in the said patent comprises both a passive and an active part of an air heat exchanger. The passive part consists of a cross heat air exchanger in which heat is transferred from the air drawn from the interior to the air supplied from the exterior. The air pre-treated in this way enters the active part consisting of heat exchangers, between which a thermoelectric generator is placed to generate heat and cold. The unit is designed primarily as a ventilation unit with the possibility of heating or cooling. The active part is directly a part of the unit body and therefore it is relatively small, and it is not possible to use the unit as a primary source of heat or cold.

The present invention also utilizes a combination of the passive and active parts of the air exchangers in a cascade. However, the solution according to DE19903280C2, in comparison with the present invention, uses in the active part a less efficient co-current exchanger with an extremely small area, which is not able to transfer to the air the necessary heat for heating or cooling space of the space. The solution according to DE19903280C2 furthermore does not make it possible to use higher air flow for the dissipation of waste heat from the thermoelectric modules than the air flow for ventilation. Also, this fact significantly reduces the efficiency of the active heat exchanger and hence of the whole unit. In contrast, the solution of the present invention eliminates this disadvantage by using additional exterior air to remove heat from the active part. This feature is especially important when using the unit in the cooling mode in summer. The proposed principle of the present invention utilizes both additional exterior air for increased waste heat dissipation and additional interior air to fan the active interior side of the heat exchanger. The airflow rate used to dissipate the heat is then not equal to the airflow rate for ventilation.

DE19903280C2 also does not mention the possibility of using surplus energy from the photovoltaic systems for cooling in the summer. It is the units with the active exchanger with the possibility of continuous power regulation that are essential for the use of surplus energy from photovoltaic systems for the production of cold. For buildings with photovoltaic systems, the use of electricity during the summer is problematic due to the time mismatch in production and consumption.

Patent application US5761908A - Apparatus suited for ventilating rooms contaminated with infectious disease organisms describes a device partially similar to the subject of protection. The unit consists of a combination of passive and active exchanger, which comprises thermoelectric modules, where it is possible to control their total number and thus the total power of the active module. The description focuses on the possibility of using several filters for supply air filtration and also on the construction of an active finned heat exchanger. The unit is primarily designed as a ventilation with the possibility of heating, i.e. heating or cooling. The primary use is predominantly for rooms with higher demand for hygiene or sterility.

Compared to the proposed solution, which is the subject of protection, there is again no possibility of using additional exterior air for better dissipation of waste heat in the case of operation of the unit in cooling mode. The solution according to US5761908A offers the possibility of changing the power of the active part by changing the number of active thermoelectric modules, but does not offer the possibility of changing the power of individual modules or some sections.

The possibility of combining the unit's power supply with a photovoltaic system is also not presented.

### Principle of the invention

According to the invention, there is provided a ventilation unit as defined in claim 1.

The above drawbacks are overcomed by the newly developed ventilating unit with the possibility of heating and cooling with increased waste heat dissipation according to the present invention. The proposed modifications significantly improve the overall efficiency of the ventilation unit with the possibility of heating and cooling.

This ventilation unit is intended for the ventilation of a building having an interior and an exterior and also offers the possibility of heating and/or cooling the building. The ventilation unit comprises a passive module comprising at least one passive heat air exchanger for heat recovery. This passive module has at least two inputs and at least two outputs. The ventilation unit also includes an active module comprising at least one active heat air exchanger. The active module also has at least two inputs and at least two outputs.

The passive module at its first input is connected to the fresh air input from the exterior, at its second input it is connected to the exhaust air input from the interior. The first output of this passive module is interconnected with the first input of the active module and the second output of this passive module is interconnected with the second input of the active module.

Each active heat air exchanger comprises at least one heat modifier and two separate chambers, wherein each first chamber of the said active heat air exchanger has an input of a first chamber and an output of a first chamber. Similarly, the second chamber of the said active heat air exchanger has an input of a second chamber and an output of a second chamber.

Wherein additionally the input of at least one first chamber is interconnected, directly or through other elements, to the second input of the active module and the output of at least one first chamber is interconnected, directly or through other elements, to at least one exhaust air output to the exterior.

The input of at least one second chamber is connected, directly or through other elements, to the first input of the active module and the output of at least one second chamber is connected, directly or through other elements, to at least one air output to the interior.

Whereas the principle of the present invention is that the ventilation unit is additionally provided with a second air duct for supplying additional air from the exterior, which is at its first end interconnected with the fresh air input from the exterior and at its other end interconnected with the second input of the active module.

In an advantageous embodiment, the second air duct for supplying additional air from the exterior is fitted with a seasonal flap for closing the air duct in the heating mode in the winter season and for opening it in the cooling mode in the summer season.

Also advantageous is an embodiment with two passive heat air exchangers. In this embodiment, the passive module comprises a secondary passive heat exchanger having a first internal branch of the secondary passive heat air exchanger and a second internal branch of the secondary passive heat air exchanger. It also comprises a primary passive heat air exchanger having a first internal branch of the primary passive heat exchanger connecting its first input with its first output and the second internal branch of the primary passive heat air exchanger connecting its second input to its second output. Wherein the output of at least one first chamber of at least one active exchanger is interconnected with the exhaust air output to the exterior through the second internal branch of the secondary passive heat air exchanger. Additionally, the fresh air input from the exterior and the first passive module input are interconnected thereto, being interconnected with the first input of the primary passive heat exchanger through the first internal branch of the secondary passive air exchanger, wherein the first input of the primary passive heat exchanger is further interconnected through the first branch of this primary passive heat air exchanger to its first output which is further interconnected with the first output of the passive module. The second input of the primary passive heat air exchanger is then interconnected on one side with the second input of the passive module and on the other side, also through the second internal branch of the primary passive heat air exchanger, is interconnected to its second output. This second output of the primary passive heat air exchanger is finally interconnected with the second output of the passive module.

The output of at least one second chamber may, in an advantageous embodiment, be interconnected with at least one air output to the interior through a water-air heat exchanger which is connected to a standard hot-water heating system of the building.

It is also advantageous if the ventilation unit is fitted with a cover in such manner, that between the cover and at least one second chamber of at least one active exchanger a ventilated gap exists at least along a portion of the outer wall of the second chamber having an input for drawing air from the interior at one end and a slot diffuser output for blowing air into the interior at the opposite end. Concurrently, the diffuser slot for blowing air into the interior opens into the mouth of the second chamber before the output of this second chamber.

It is advantageous, if the ventilation unit further comprises an exterior air bypass air duct fitted by a first bypass flap, and also an interior air bypass air duct fitted with a second bypass flap for internal circulation of interior air between the interior exhaust air input and the air output to the interior. This internal circulation takes place through the second chamber without supplying fresh exterior air to this second chamber and the interior.

With an advantage, at least one indoor environment quality sensor is placed within the building, with at least one of these indoor environment quality sensors being interconnected, directly or through other elements, to the ventilation unit.

In an advantageous embodiment, at least one heat modifier comprises a first heat exchange structure positioned in the first chamber and a second heat exchange structure positioned in the second chamber, wherein this first chamber and this second chamber are located in the same active heat air exchanger, of which the said heat modifier is a part of. At least one thermoelectric module is inserted between the first heat exchange structure and the second heat exchange structure. The ventilation unit further comprises at least one control unit and each thermoelectric module is interconnected to one of the control units.

Also advantageous embodiment is such in which each of the heat transfer structures, between which at least one thermoelectric module is inserted, is equipped with at least one temperature measuring sensor, wherein all of these sensors are connected to the same control unit as the thermoelectric modules located between the heat exchanger structures equipped with these sensors.

The individual thermoelectric modules can be joined into sections that are connected to mutually separate control circuits within a single control unit. Alternatively, each section can also be connected to a separate control unit.

With an advantage, it possible to apply an embodiment in which a photovoltaic system is installed in the exterior and which is interconnected in one branch with the electrical network in the building, to which the ventilation units and other electrical appliances in the building are connected, wherein the electrical network in the building is interconnected to the distribution system through an instrument for measuring energy feeding the distribution grid. The building is further equipped with a control system 59, which is interconnected on one side with the instrument for measuring energy overflows to the distribution system and on the other side to the control units.

In an advantageous embodiment, at least one control unit is interconnected to at least one indoor environment quality sensor.

The ventilation unit designed in this way has many advantages, such as increasing the efficiency of the dissipation of waste heat from the interior in the summer season, increased cooling and heating efficiency, and efficient use of the surplus electricity generated mainly during the summer season, to cool the building.

Other advantages will be apparent from the exemplary embodiments of the invention.

### Drawings Description

The invention is explained in more detail with reference to the attached drawings.
Figure 1a shows a block diagram of the ventilation unit basic configuration, whose passive module comprises one passive heat air exchanger. The individual components of the ventilation unit and the air flow through the individual heat exchangers of the unit are shown.
Figure 1b shows the arrangement of the ventilation unit according to Figure 1a supplemented by identification of the exterior and interior air bypass air ducts with the respective flaps.
Figure 1c shows a block diagram of another possible arrangement of the ventilation unit in a configuration where the passive module comprises two passive heat air exchangers. Also shown is the possibility of an interconnection with a water-air heat exchanger for heating air from existing heating systems.
Figure 1d shows the arrangement of the ventilation unit according to Figure 1c supplemented with the identification of the exterior and interior air bypass air ducts with the respective flaps.
Figure 2a shows a possible air handling unit arrangement, where the passive module comprises one passive heat exchanger and the active module comprises three vertically situated active heat exchangers with an illustration of thermoelectric modules and the output of fresh thermally conditioned air into the interior.
Figure 2b shows a rear view of another possible unit arrangement, where the passive module comprises one passive heat exchanger and the active module comprises three horizontally situated heat exchangers with an illustration of thermoelectric modules, fans, bypass air ducts with the respective flaps and air input and output openings to the exterior and interior.
Figure 2c shows a front view of a possible arrangement of the unit shown in Figure 2.b, where the passive module comprises one passive heat exchanger and the active module comprises three horizontally situated heat exchangers with an illustration of thermoelectric modules, fans, bypass air ducts with the respective flaps and input and output openings air for exterior and interior.
Figure 2d shows a simplified diagram of the unit in an internal air circulation mode with the possibility of cooling or heating it in the active heat exchanger.
Figure 2e shows a cross-section of an active heat exchanger in which the advantageous shape of the heat exchange structures is clearly visible.
Figure 3 shows a detail of a possible arrangement of a ventilated gap into which air is supplied from the interior to fan the second chamber of the active heat exchanger.
Figure 4a shows the setup of thermoelectric modules and temperature sensors on the heat exchange structures located in an active heat air exchanger in an embodiment, where the thermoelectric modules and sensors are connected jointly to one control unit.
Figure 4b shows another possible setup of thermoelectric modules and temperature sensors to the heat exchange structures located in the active heat exchanger in an embodiment, where the thermoelectric modules are joined into sections that are connected to mutually separate control circuits within a single control unit. The connection of temperature sensors to this control unit is also shown.
Figure 5 shows a block diagram of the power control of the ventilation unit under direct power supply from a photovoltaic source.
Figure 6 shows a block diagram of the ventilation unit power control based on surplus electricity from the photovoltaic system installed in the building.
Figure 7 shows a block diagram of the unit control based on indoor environment quality measurement.

### Examples of Invention Embodiments

It is to be understood that the specific embodiments of the invention described and illustrated hereinbelow are presented by way of illustration and not by way of limitation of the examples of the invention to the examples provided.

Throughout this patent application, the terms connected, interconnected and word forms derived from these terms are understood to mean both direct connection or interconnection and also connection through other elements that may possibly be inserted into the ventilation unit. The interconnection or connection for the air flow is usually implemented by air ducts. By means of air ducts, typically, the passive module 4 and the active module 5 and also the heat air exchangers contained therein are interconnected, and the air ducts also connect them to the air inputs and outputs from/to the exterior 2 and also from/to the interior 3. Parts that are electrically powered or controlled are also provided with electrical connections or interconnections.

Here, in this text, as in the Patent Claims, a ventilation unit means the unit 1 for local ventilation which enables heat and cold recovery, heating or heating and cooling. The basic building blocks of this ventilation unit 1 include the passive module 4 with at least one passive heat air exchanger 30 and the active module 5 comprising at least one active heat air exchanger 35. Each active air heat exchanger 35 comprises at least one heat modifier 6 and two separate chambers 22, 23. The passive module 4 has at least two inputs and at least two outputs, similarly the active module 5 has at least two inputs and at least two outputs. The ventilation unit 1 is primarily intended for controlled ventilation of rooms, but also as a replacement for radiators and cooling equipment (air-conditioning units). Ventilated and/or cooled and/or heated can be any building 60, such as a building structure or a room. This building 60 has an interior 3 and an exterior 2.

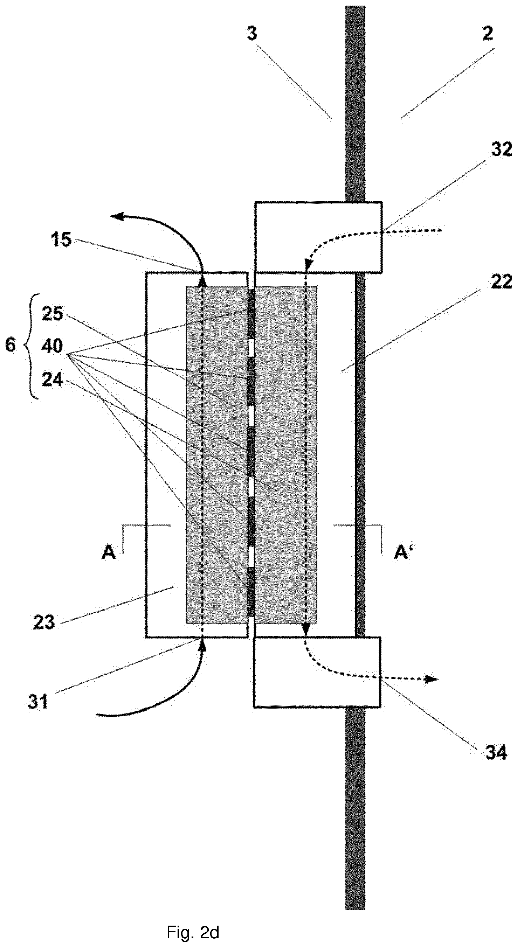

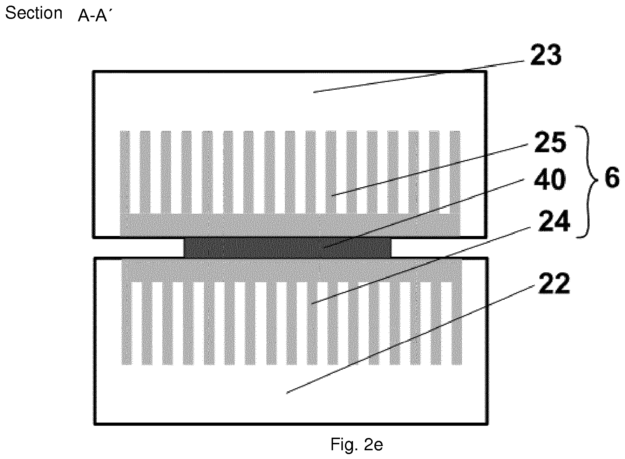

The thermal modifier 6 may be implemented, for example, as a heater at any wall of one of the chambers 22, 23 and/or thermally insulated cooler insulated from it, at any wall of the second chambers 22, 23. Alternatively, this function may be performed by thermoelectric module 40 between the two chambers, heating a wall of one of the chambers 22, 23, and cooling its apparent wall of the second chambers 22, 23. The thermoelectric module 40 may comprise a single thermocouple cell or a cascade thereof. In the most advantageous embodiment, the heat modifier 6 is then supplemented with heat exchange structures 24, 25, wherein the first heat exchange structure 24 is located in the first chamber 22 and the second heat exchange structure 25 is located in the second chamber 23 of the same active heat air exchanger 35, whose part is thermal modifier 6. The heat transfer structures 24, 25 are made of a thermally conductive material, typically aluminum, and are intended to increase the heat exchange area in chambers 22, 23 and better transfer heat and cold in the space of the chambers to the flowing air. They may take the form of, for example, interconnected ribs, see, for example, Figures 2d, 2e. In the following text, the most advantageous embodiment of the thermal modifier 6 with heat exchange structures 24, 25 and thermoelectric module 40 is predominantly described, but as mentioned above in this paragraph, thermal modifier 6 may be implemented in another manner, wherein all these embodiments fall within the scope of protection. The number of thermal modifiers 6, implemented in the most advantageous embodiment with heat exchange structures 24, 25 and thermoelectric module 40, can be freely established.

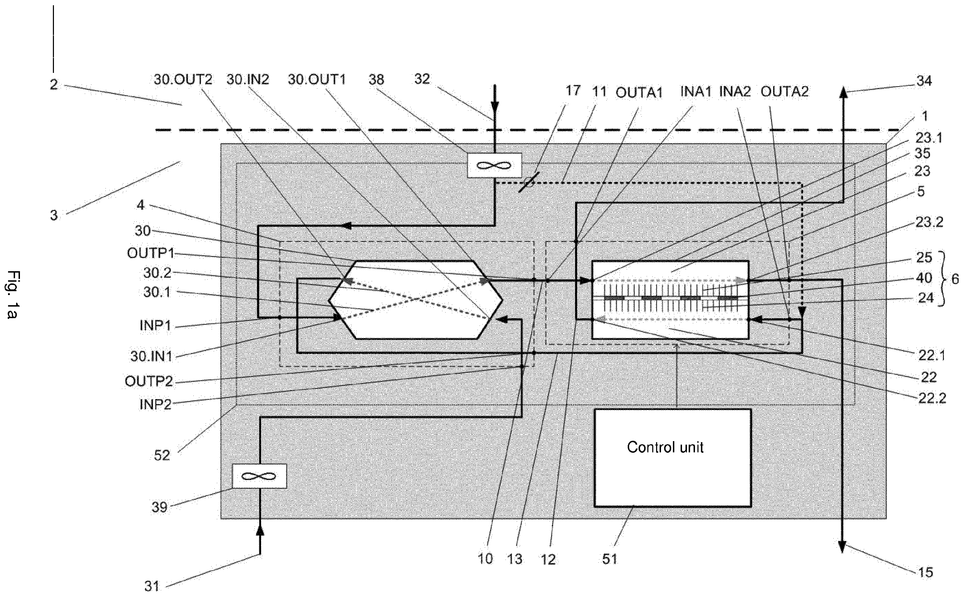

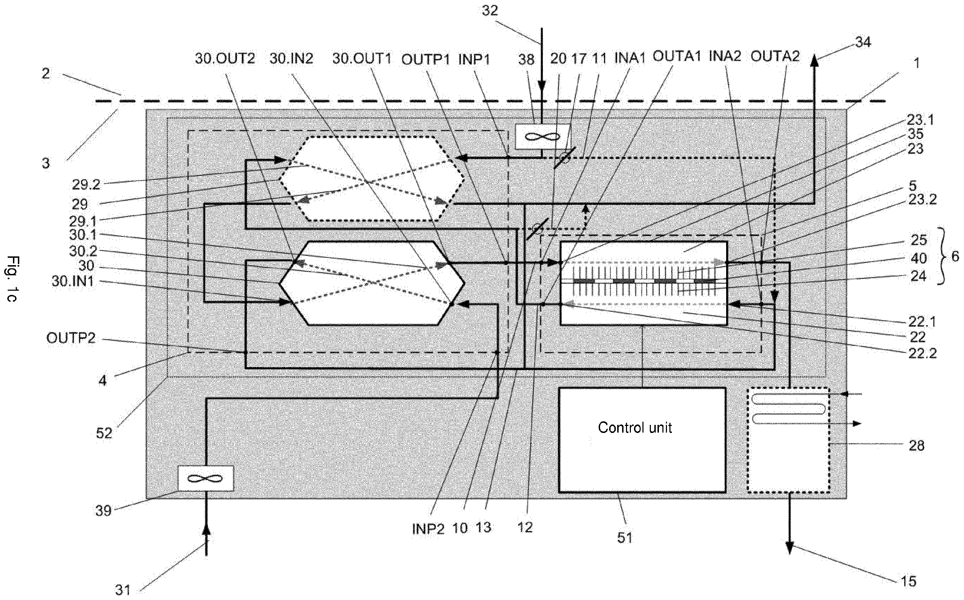

In the designed way of ventilation with the possibility of heating and/or cooling in the embodiments according to Figures 1a or 1c, the exhaust air from the interior 3 and also fresh air from the exterior 2 is directed to the ventilation unit 1 and its passive module 4. Subsequently, the exhaust air passes through one part of the passive module 4 and fresh air through the other part of the passive module 4, so that heat exchange occurs between them. Then, after leaving the passive module 4, the exhaust air is directed to the second input INA2 of active module 5, and the fresh air after leaving passive module 4 is directed to the first input INA1 of active module 5. Subsequently, the exhaust air supplied to the second input INA2 of active module 5 passes through at least a part of the elements of active module 5, while through the other elements of the active module passes fresh air supplied to the first input INA1 of active module 5 in such manner, that heat exchange occurs between the fresh and exhaust air. Then, this fresh air is directed to at least one air output 15 into the interior 3 and the exhaust air is directed to at least one exhaust air output 34 to the exterior 2. What is new and important is, that to the exhaust air entering through the second input INA2 into the active module 5, additional fresh air is admixed, which is to the second INA2 input of active module 5 supplied from exterior 2, for example by fresh air input 32 from the exterior. This additional fresh air directed to the second input of the active module INA2 can generally also be supplied through an input other than the fresh air input that is directed to passive module 4. The additional fresh air directed to the second input INA2 does not pass through the passive module 4 and is in active exchanger 35 or in active exchangers 35 physically mixed with the exhaust air.

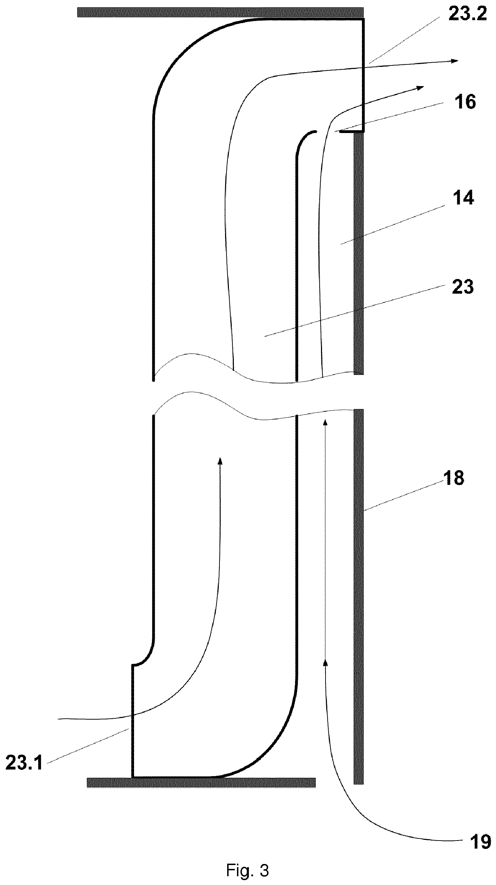

Due to this arrangement, an increase in the efficiency of the active exchangers 35 is achieved by the fact that waste heat from thermoelectric modules 40 is removed, due to the supply of additional air from the exterior. Higher air flow for waste heat dissipation is used than the air flow for ventilation. The higher efficiency of active exchanger 35 or active exchangers 35 then leads to an increase in the efficiency of the entire ventilation unit 1. This feature is especially important when using the unit in the cooling mode in summer. The efficiency is further increased by supplying additional interior air to fan the active interior side of the heat exchanger through a gap 14, which is described in more detail in the description of Figure 3. Due to these measures the air flow used to dissipate the heat is greater than the air flow for ventilation.

The ventilation unit 1 used to perform in this manner has at least one fresh air input 32 from the exterior 2 and at least one exhaust air output 34 to the exterior 2. It also has at least one exhaust air input 31 from the interior 3 and at least one air output 15 to the interior 3. The number of these inputs and outputs can be higher. Especially additional fresh air may be supplied to the second input INA2 of the active module 5 from the exterior 2 through other input 32 than the one supplying fresh air to the passive module 4. In the figures, for the sake of simplicity, an embodiment with only one of each of the above types of inputs and only one of each of the above types of outputs is shown.

The general principle of the device is as follows: Fresh air, drown in through fresh air input 32 from exterior 2, is directed to the first input of INP1 of the passive module and subsequently thermally conditioned in this passive module 4 which may comprise a primary passive heat air exchanger 30 or for example a cascade of primary and secondary passive heat exchangers 30, 29. Subsequently, this thermally conditioned fresh exterior air is directed to the first output OUTP1 of the passive module 4 and by means of first air duct 10 is directed to the first input INA1 of the active module 5. From here it is distributed to one or more active heat air exchangers 35. Thermal energy generated by thermoelectric module 40, is transferred in the first chambers 23 of active heat exchanger 35 to the fresh exterior air via the second heat exchange structure 25 and the air is then directed to the second output OUTA1 of the active module and from there directly, or e.g. through the water-air heat exchanger 28, to the air output 15 to the interior through which it is supplied to the interior 3. The exhaust air from the interior is drawn in through the exhaust air input 31 from the interior and passes through the primary passive heat air exchanger 30 further to the second output OUTP2 of the passive module, from where it is routed via fourth air duct 13 to the second INA2 of the active module 5. From here it is further distributed to one or more active heat air exchangers 35, specifically to the first chambers 22, where the heat exchange occurs between the first heat exchange structure 24 and the flowing exhaust air. The air goes further to the first output OUTA1 of the active module from where it is conveyed by the air duct 12 and then, according to the unit configuration, is directed either the to the secondary passive heat air exchanger 29 or is directly discharged to the exterior 2 through output 34 of exhaust air to the exterior.

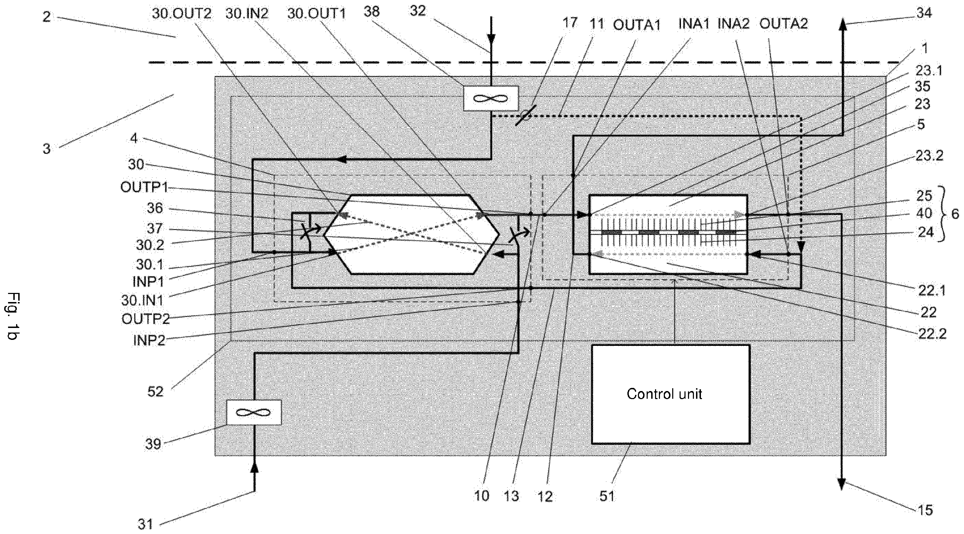

Figures 1a, 1b demonstrate a block diagram of the ventilation unit 1 in the basic configuration with one primary passive heat air exchanger 30 and with an indication of the exterior 2 and interior 3 environment of a ventilated and/or heated and/or cooled building 60. In practice, building 60 may be a room, multiple rooms or even a whole building. The figure shows the principle of the basic cascade setup of the primary passive heat air exchanger 30 and the active heat air exchanger 35 and the conditioned air flow.

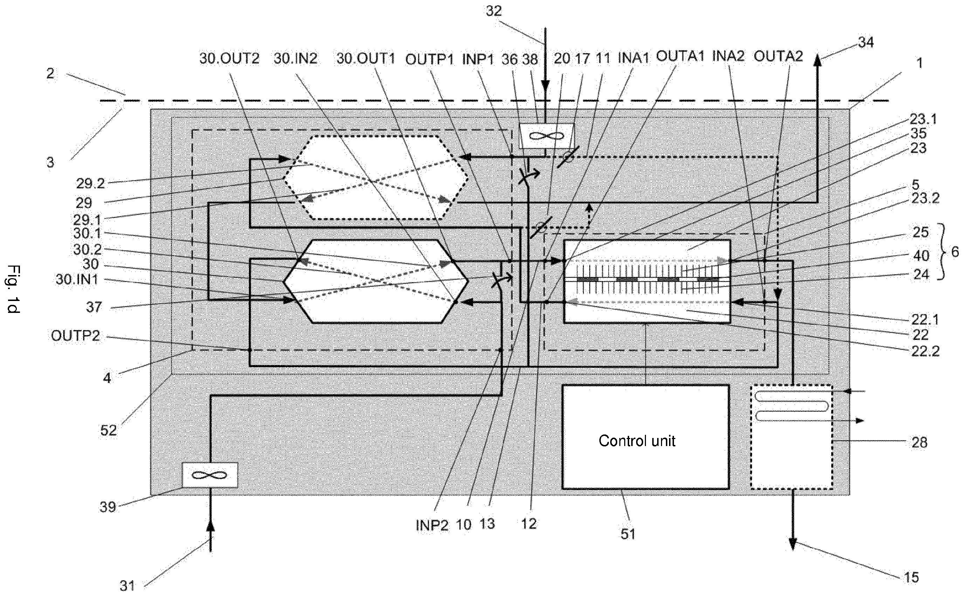

As a possibility, the setup may include a plurality of passive heat air exchangers, as shown in Figures 1c, 1d with two of these passive heat air exchangers, which are in this Figure denoted by numbers 29, 30. However, the number of passive heat exchangers may be greater than two. Passive heat exchangers are included in the part of the device collectively called the passive module 4.

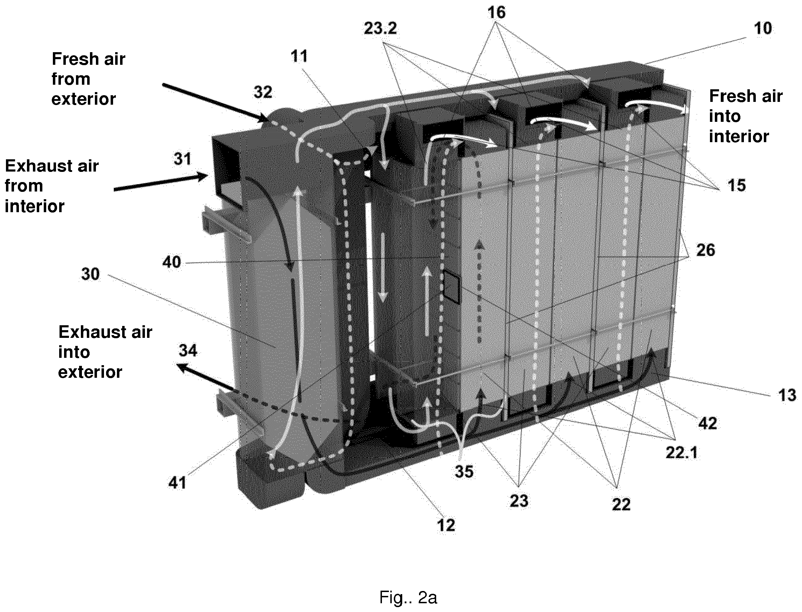

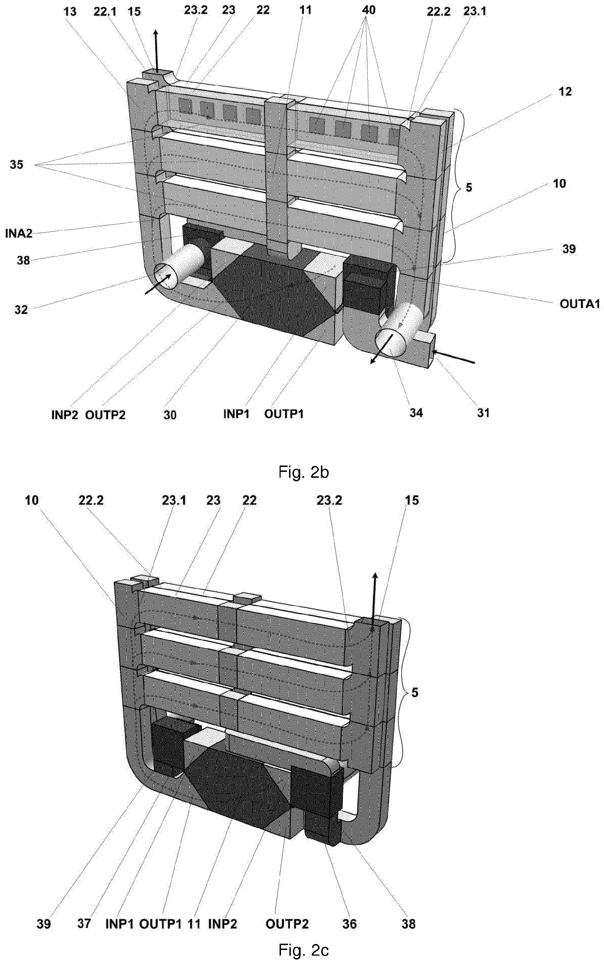

Similarly, the ventilation unit 1 may include a plurality of active heat exchangers 35, as shown in Figures 2a, 2b, 2c. The number of active heat air exchangers depends on the total air flow requirement. Active heat air exchangers 35 are included in the part of the device collectively called the active module 5.

The passive air heat exchangers 29, 30 may be, with an advantage, counterflow or crossflow. Here, the heat exchange between the air drawn from interior 3 and air drawn from exterior 2 takes place. It is here, where the greatest difference in temperature is, and therefore the heat exchange is very efficient. In some cases, supplementary heat exchange with air that has already passed through the active module may also occur in these heat exchangers 5, as shown in Figures 1c, 1d. The air conditioned by the passive air heat exchanger 30 or by several passive air heat exchangers 29, 30 enters one or more active heat air exchangers 35, where its temperature is further adjusted. Each active heat air exchanger 35 is formed by two air chambers 22, 23 with thermoelectric modules 40 inserted between them, which cool one surface and heat the other, depending on the polarity and magnitude of the current flow. Heat or cold in the individual air chambers 22, 23 is shared between the fixed active heat air exchanger 35 and the flowing air. Air from second chamber 23 enters the interior 2 as fresh thermally conditioned air, and the air from the first chamber 22 serves to remove waste heat from the second surface of thermoelectric modules 40 and is either directly blown out through exhaust air output 34 to exterior 3 as shown in Figure 1a, 1b, or in an alternative configuration, as shown in Figures 1c, 1d, passes through the additional secondary passive heat air exchanger 29 here it passes/absorbs residual heat to/from the fresh air from exterior 3.

The passive module 4 has at least two inputs and at least two outputs. Similarly, the active module 5 has at least two inputs and at least two outputs. The delineation of modules 4 and 5 in Figures 1a, 1b, 1c, 1d, is indicated by a dashed line with a longer dashing.

As is shown in Figures 1a, 1b, 1c, 1d, the passive module 4 is at its first input INP1 connected to at least one fresh air input 32 from the exterior 2 and at its second input INP2 it is connected to at least one exhaust air input 31 from the interior 3. The first output OUTP1 of the passive module 4 is then interconnected with the first input INA1 of the active module 5 and its second output OUTP2 is interconnected with the second input INA2 of the active module 5.

Each active heat air exchanger 35 comprises a thermal modifier 6 allocated to this heat exchanger and two separate chambers 22, 23 with flowing air also allocated to this heat exchanger. Each first chamber 22 of the said active heat air exchanger 35 has concurrently a first chamber input 22.1 and a first chamber output 22.2. Similarly, each second chamber 23 of the said active heat air exchanger 35 has a second chamber input 23.1 and a second chamber output 23.2.

The input 22.1 of at least one first chamber 22 is connected to the second input INA2 of the active module 5. In an advantageous embodiment, inputs 22.1 of several or all second chambers 22 may be interconnected with this second input of the INA2 of the active module 5. Similarly, the output 22.2 of at least one first chamber 22 is interconnected with the first output OUTA1 of the active module 5. In an advantageous embodiment, the outputs 22.2 of several or all first chambers 22 may be connected to this first output OUTA1 of the active module 5

The input 23.1 of at least one second chamber 23 is interconnected with the first input INA1 of the active module 5. In the advantageous embodiment, inputs 23.1 of several or all second chambers 23 may be interconnected to this first input INA1 of the active module 5. Similarly, output 23.2 of at least one second chamber 23 is interconnected with this second output OUTA2 of the active module 5. In an advantageous embodiment, outputs 3.2 of several or all second chambers 23 may be interconnected with this second output OUTA2 of the active module 5.

The first chamber 22 provides heat exchange between the exhaust air and the heat or cold supplied through the thermal modifier 6. In the most advantageous embodiment, this heat exchange is optimized by the first heat exchange structure 24 within chamber 22. The first heat exchange structure 24 also forms one wall of the first chamber 22. The second chamber 23 provides heat exchange between fresh air and the heat or cold supplied by the thermal modifier 6. In the most advantageous embodiment, this heat exchange is optimized by the second heat exchange structure 25, which concurrently forms one wall of the chamber 23. Between at least one first heat exchange structure 24 in at least one first chamber 22 and at least one second heat exchange structure 25 in at least one second chamber 23, the first chamber 22 and the second chamber 23 being located in the same active heat air exchanger 35, at least one thermoelectric module 40 is inserted. The ventilation unit 1 also comprises at least one control unit 51, wherein each thermoelectric module 40 is connected to one of the control units 51.

Each thermoelectric module 40 has a first surface 41 and a second surface 42 intended to transmit thermal energy between the thermoelectric module 40 and heat exchange structures 24 and 25, depending on the direction of the electrical current flow. As the feed current passes through the thermoelectric module 40 in one direction, its first surface 41 heats up and the second surface 42 cools. When the feed current is reversed, the opposite effect occurs, in which the first surface 41 cools and the second surface 42 heats up. By reversing the direction of the current, heat is removed from the air flow in the chamber 23 in the cooling mode or the air is heated in chamber 23 in the heating mode. The cooling or heating capacity depends on the amount of current flowing through the thermoelectric module 40. The amount of current is controlled by the control unit 51. The thermoelectric module 40 may be a single thermoelectric cell or a cascade thereof. The thermal contact of the second surface 42 of the thermoelectric module 40 with the second heat exchange structure 25 and the first surface 41 of the thermoelectric module 40 with the first heat exchange structure 24 can be improved by using a thermally conductive paste or other thermally conductive material.

Heat exchange structures 24, 25 in chambers 22, 23 in active heat air exchangers 35 may be formed by ribbed sheets, see, for example, Figure 2e, or by another conveniently formed heat transfer structure made of a thermally well conductive material. The individual parts of the active heat air exchangers 35 are thermally insulated by an insulation material 26 which prevents undesired heat exchange.

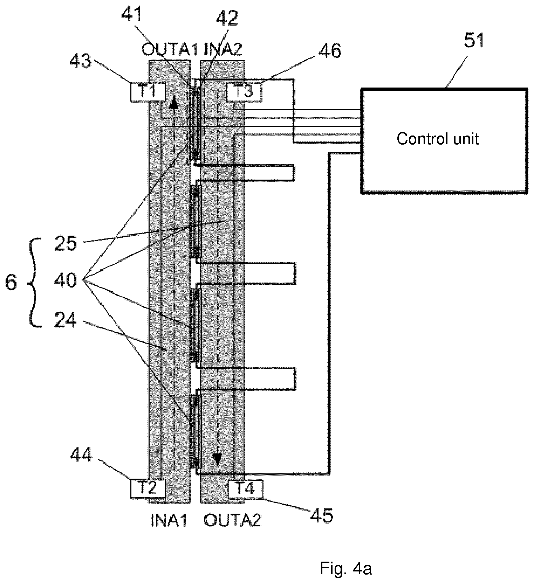

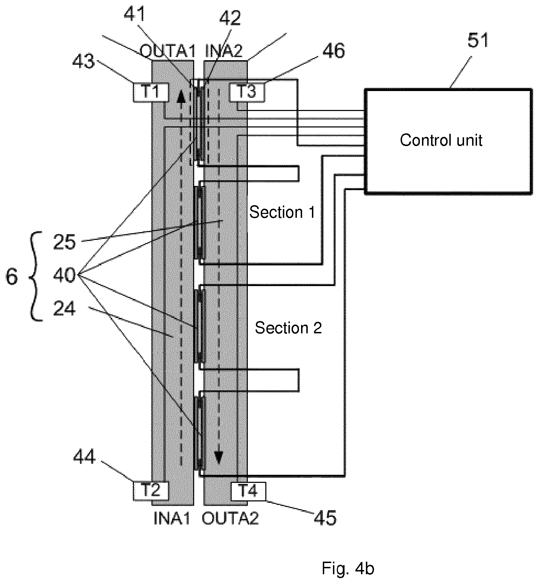

An example detail of heat exchange structures 24, 25 arrangement and thermoelectric modules 40 is shown in Figures 4a, 4b.

However, the active exchangers 35 may also be implemented with a different element providing air heating and/or cooling than the thermoelectric modules 40.

Input 22.1 of at least one first chamber 22 associated with one of the active heat air exchangers 35 is interconnected, directly or through other elements, to the second input INA2 of the active module 5. In the most advantageous embodiment, this interconnection with the second input INA2 of the active module 5 relates to all inputs 22.1 of all the first chambers 22 of all active air heat exchangers 35.

Similarly, the output 22.2 of the at least one first chamber 22, associated with one of the active heat air exchangers 35, is directly or through other elements, interconnected with at least one exhaust air output 34 to the exterior 2. In the most advantageous embodiment, this interconnection with at least one exhaust air output 34 to the exterior relates to all outputs 22.2 of all first chambers 22 of all active heat air exchangers 35. The number of exhaust air outputs 34 to the exterior may be higher in the case that the outputs 22.1 of the first chambers 22 of the active heat air exchangers 35 are conducted to the exterior 2 individually. However, they can also be joined in a common air duct to conduct the exhaust air to the exterior 3 via single output 34.

The input 23.1 of at least one second chamber 23 associated with at least one of the active heat air exchangers 35 is interconnected, directly or through other elements, to the first input INA1 of the active module 5. In the most advantageous embodiment, this interconnection with the first input INA1 of the active module 5 relates to all outputs 23.1 of all second chambers 23 of all active heat air exchangers 35.

The output 23.2 of at least one second chamber 23 associated with at least one of the active air heat exchangers 35 is interconnected, directly or through other elements, to at least one air output 15 to interior 3.

An essential feature of the invention is that the ventilation unit 1 is provided with a second air duct 11 for supplying additional air from exterior 2, which is at its first end interconnected with fresh air input 32 from exterior 2 and at its other end interconnected with a second input INA2 of the active module 5. This second air duct 11 in an advantageous embodiment fitted with a seasonal flap 17 for closing the second air duct 11 in the heating mode in the winter season and for opening it in the cooling mode in the summer season. Thus, in the cooling mode, to the exhaust air which then flows through the first chamber 22 or the first chambers 22 to the output or outputs 34 of exhaust air to the exterior 2, additional fresh air from exterior 2 is admixed from fresh air input 32 from exterior 2. Thereby, the dissipation of waste heat from the first chambers 22 of the active heat air exchangers 35 is increased when the airflow for the dissipation of waste heat to the exterior 2 is generally increased. The seasonal flap 17 is opened when the ventilation unit 1 is operated in the cooling mode and is closed when the ventilation unit 1 is operated in the heating mode.

In the setup according to Figures 1a, 1b with one passive heat air exchanger, the first input INP1 of the passive module 4 is interconnected with the first input 30.IN1 of the primary passive heat air exchanger 30, which is further through the first internal branch 30.1 of this exchanger interconnected with its first output 30.OUT1. The first output 30.OUT1 of the primary passive heat air exchanger 30 is then further interconnected with the first output OUTP1 of the entire passive module 4. Additionally, these figures show the second input INP2 of the passive module 4 being interconnected with the second input 30.IN2 of the primary passive heat air exchanger 30, which is interconnected through the second internal branch 30.2 of this exchanger with the second output 30.OUT2 of this exchanger, which is further interconnected with the second output OUTP2 of the entire passive module 4. Figure 1b differs from Figure 1a by the addition of an exterior air bypass air duct 36 fitted with the first bypass flap and an interior air bypass air duct 37 fitted with the second bypass flap. This arrangement serves for the internal circulation of interior air between the exhaust air input 31 from interior 3 and the air output 15 to interior 3 through the second chamber 23 or through the second chambers 23 in the case of multiple active heat air exchangers 35. Thus, in this internal circulation mode, exterior air is not conducted into this second chamber 23, or into these second chambers 23, but only heating or cooling of the interior air occurs in chambers 23 of active heat exchangers 35 and its direct conveying into the interior 3 through the air output 15 to interior 3. The flaps on the bypass air ducts 36 and 37 are open and thus allow air flow, in the internal air circulation mode they are closed, and thus do not allow air flow when used for fresh air ventilation.

Figures 1c, 1d show a more complex arrangement of the ventilation unit 1 with two passive heat air exchangers 29, 30. In this embodiment, fresh air from fresh air input 32 from the exterior 2 is conveyed through the first input INP1 of the passive module first to the secondary passive heat exchanger 29, where it receives thermal energy derived from the temperature difference of the exhaust and exterior fresh air. The secondary passive heat exchanger 29 is not necessarily a part of the system and is mainly useful in the heating mode to increase the efficiency of heat recovery from exhaust air. In fact, the residual heat from the exhaust air is in the heating mode in the secondary passive heat exchanger 29 transferred to the fresh air from the exterior. On the other hand, in the cooling mode, the secondary passive heat air exchanger 29 must be bridged by the bypass air duct 20 with a flap so that the device operates only with the primary passive heat air exchanger 30 in the same way as shown in Figures 1a, 1b. In the heating mode, the air thermally conditioned in the secondary heat exchanger 29 enters the primary passive heat air exchanger 30, where the direct heat exchange between the conditioned fresh exteriorl air from the secondary passive heat exchanger 29 and the interior exhaust air drawn from interior 3 through exhaust air input 31 from interior 3 occurs. Then the fresh exterior air is conducted from the first output 30.OUT1 of the primary passive heat air exchanger 30, which is interconnected to the first output of OUTP1 of the entire passive module 4, through the first air duct 10 to the first input INA1 of the active module and further distributed to the individual active air heat exchangers 35, more specifically, to their second chambers 23.

A detailed description of the setup according to Figures 1c, 1d is as follows: The passive module 4 in these embodiments comprises a secondary passive heat exchanger 29 having a first internal branch 29.1 and a second internal branch 29.2. It also comprises a primary passive heat air exchanger 30 having a first inner branch 30.1 connecting its first input 30.IN1 to its first output 30.OUT1 and a second internal branch 30.2 connecting its second input 30.IN2 to its second output 30.OUT2.

Concurrently, the output 22.2 of at least one first chamber 22 of at least one active exchanger 35 is interconnected with the exhaust air output 34 into the exterior 2 through the second internal branch 29.2 of the secondary passive heat air exchanger 29.

The fresh air input 32 from the exterior 2 and the first input INP1 of the passive module 4 interconnected thereto, are interconnected with the first input 30.IN1 of the primary passive heat exchanger 30 through the first internal branch 29.1 of the secondary passive air exchanger 29. This first input 30.IN1 of the primary passive heat exchanger 30 is further interconnected through the first inner branch 30.1 of this primary passive heat air exchanger 30 to its first output 30.OUT1, which is interconnected with the first output OUTP1 of the passive module 4.

Additionally, the second input 30.IN2 of the primary passive heat air exchanger 30 is interconnected on one side with the second input INP2 of the passive module 4 and on the other side it is also interconnected through the other internal branch 30.2 of the primary passive heat air exchanger 30 with its second output 30.OUT2.

This second output 30.OUT2 of the primary passive heat air exchanger 30 is interconnected with the second output OUTP2 of the passive module 4.

In this application, wherever reference is made to interconnecting the inputs or outputs of the individual heat air exchangers 29, 30, 35 or their chambers 22, 23 with the inputs or outputs of the respective modules 4 and 5, this interconnection should be understood to include a situation, when the output or input of the exchanger or the chamber directly matches the output or input of the module.

Figure 1d differs from Figure 1c by the addition of the exterior air bypass air duct 36 fitted with the first bypass flap and the interior air bypass air duct 37 fitted with the second bypass flap. This arrangement, similar to Figure 1b, is used for the internal circulation of the interior air between the exhaust air input 31 from the interior 3 and the air output 15 to the interior 3 through the second chamber 23 or through second chambers 23 in the case of multiple active heat air exchangers 35. The supply of exterior air into this second chamber 23 or into these second chambers 23 does not occur, but only for heating or cooling of the interior air in these chambers 23 of active heat exchangers 35 and direct supply to the interior 3 through the air output 15 to the interior 3.

For forced air flow through the ventilation unit 11, the unit may be equipped with fans, for example by the exterior air fan 38 and the interior air fan 39, their possible locations are shown in Figures 1a, 1b, 1c and 1d.

Also possible is a configuration with supplementary heating by means of a water-air heat exchanger 28 which is inserted between the output 23.2 of at least one second chamber 23 and the air output 15 to the interior 3. Even more advantageously, this water-air heat exchanger 28 may be placed between the common second output OUTA2 of the active module 5, to which multiple outputs 23.2 are connected from a plurality of second chambers 23, and the air output 15 to the interior 3. The water-air heat exchanger 28 is concurrently connected to a standard hot-water heating system of building 60. The configuration with the supplementary heating by the water-air heat exchanger 28 is shown only in Figures 1c, 1d, but may also be part of the embodiment with one passive heat-exchanger according to Figures 1a or 1b. In this configuration the fresh air or in the internal circulation mode the thermally conditioned interior air flows through the water-air heat exchanger 28 before being blown into the interior. This arrangement can be used in the case of replacement of conventional radiators by the proposed solution of the ventilation unit 1 with the possibility of heating and cooling, while maintaining the original functionality of hot water heating.

Figures 2b and 2c show the front and rear view of a possible advantageous arrangement of the ventilation unit 1 components. Figure 2b displays the fresh air input 32 from exterior 2. Behind this input 32 is the exterior air fan 38, whose output is connected to the first input INP1 of the passive module 4, in this case consisting only of the primary passive heat exchanger 30. Fresh air, after passing through the first branch 30.1 of the passive exchanger 30 exits through the first output OUTP1 from the passive module 4, which is connected to the first air duct 10, to which the first input INA1 of the active module 5 is connected. In this case, the active module 5 consists of three active heat exchangers 35 situated in the horizontal direction, whose inputs 23.1 of the second chambers 23 are interconnected with the first input INA1. In the second chambers 23, heat exchange between the air flow and the second heat exchange structures 25 occurs. The outputs 23.2 of the second chambers 23 are interconnected with the second output OUTA2 of the active module 5 by an output which is, directly or through other elements, connected to the air output 15 to the interior. Figure 2b also shows a possible arrangement of the second air duct 11 for supplying additional exterior air, and thermoelectric modules 40 are also indicated between chambers 23 and 22 of the active heat exchanger 35.

The exhaust air from the interior 3 is drawn in through the exhaust air input 31 from the interior, behind which an interior air fan 39 is positioned supplying air to the first input INP2 of the passive module 4, which is concurrently the second input 30.IN2 of the primary passive heat air exchanger 30. To the second output 30OUT2 of the primary passive heat air exchanger 30, which is concurrently also the second output OUTP2 of the passive module 4, is connected the fourth air duct 13 supplying air to the active module 5 to its second input INA2. To this second input INA2, inputs of the individual active heat exchangers 35 are connected and the inputs 22.1 of their first chambers 22. The outputs 22.2 of the individual first chambers 22 are connected to the first output of the active module OUTA1, to which the exhaust air output 34 to exterior 2 is connected.

Figure 2d schematically shows the ventilation unit 1 in the internal air circulation mode with the possibility of its supplementary heating or cooling. The air is from the exterior 2 is_brought through the fresh air input 32 from the exterior, directly or through other elements, to the active module 5, namely the active heat exchanger 35 and its first chamber 22, where the heat exchange takes place. The output 22.2 of the first chamber 22 is then connected, directly or through other elements, to the exhaust air output 34 to the exterior 2. The interior air enters through the exhaust air input 31 from the interior 3, directly or through other elements, to the active module 5, namely the active heat exchanger 35 and its second chamber 23. The output 23.2 of the second chamber 23 is interconnected, directly or through other elements, to the air output 15 to the interior 3.

Figure 2.d shows only one active heat exchanger 35, but in other arrangements a plurality of heat exchangers 35 may be used.

Figure 3 shows an embodiment of the ventilation unit 1 fitted with a cover 18 in such manner, that between the cover 18 and at least one second chamber 23 of at least one active exchanger 35, at least along part of the outer wall of the second chamber 23, a ventilated gap 14 exists. This ventilated gap has an input 19 for drawing in air from the interior 3 at one end and an output slot diffuser 16 for blowing air into the interior 3 at the opposite end. Wherein the slot diffuser 16 opens into the mouth of the second chamber 23 before the output 23.2 of this second chamber 23. Due to the air flow in the space of the outflow of the second chamber 23, air is drawn in the into the ventilated gap 14 through the slot diffuser 16. Concurrently, a plurality of second chambers 23 may be equipped with cover 18. The part of the active module 5, from which fresh air is supplied to the interior 3, is thus fanned by additional air from the interior 3 flowing through the space between the wall of the second chamber 23 or second chambers 23 and the cover 18. This improves the overall heat exchange between the wall of chamber 23 and the active heat exchanger and air in the interior 3.

It is advantageous, if within the building 60 at least one sensor 56 of indoor environment quality is installed. These indoor environment quality sensors 56 can measure, for example, temperature, humidity, carbon dioxide concentration, volatile organic compound concentration, or any combination thereof. Wherein at least one of these indoor environment quality sensors 56 is interconnected, directly or through other elements, with the ventilation unit 1.

It is advantageous when each of the heat transfer structures 24, 25, between which at least one thermoelectric module 40 is inserted, is equipped with at least one sensor 43, 44, 45, 46 for temperature measuring, while all of these sensors are connected to the same control unit 51 as the thermoelectric modules 40 located between the heat exchange structures 24, 25 equipped with these sensors, as shown in Figures 4a, 4b.

The individual thermoelectric modules 40 may be connected to the control unit 51 or several control units individually, as shown in Figure 4a. Alternatively, the thermoelectric modules 40 may be joined in sections that are connected to separate control circuits within a single control unit 51, as shown in Figure 4b, or each section is connected to an independent control unit 51 (this embodiment is not shown).

Thermoelectric modules are then controlled individually or in sections according to the actual temperature difference between the heat transfer structures 24 and 25 as measured, for example, by sensors 43, 46 or sensors 44, 45. This makes it possible to increase the cooling/heating efficiency.

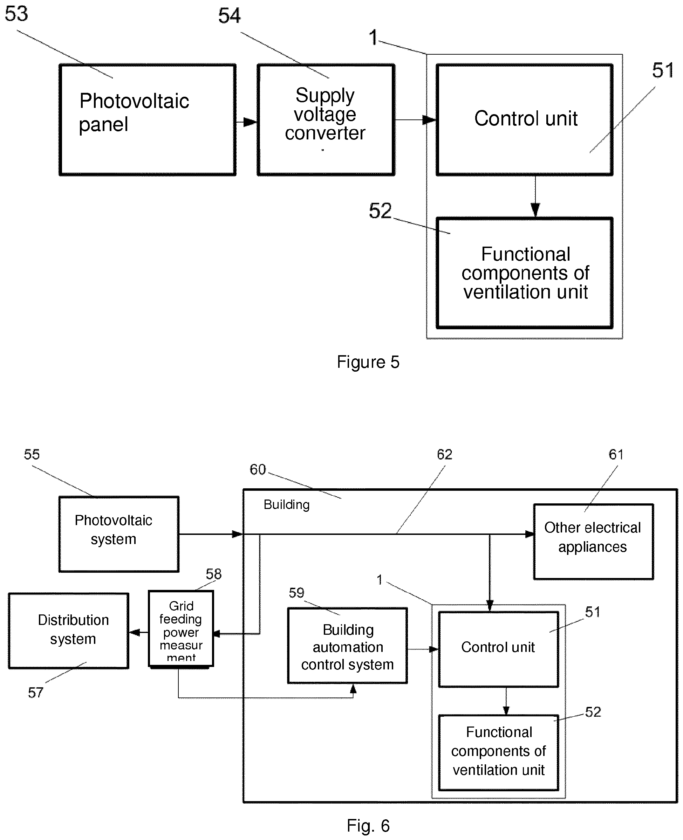

It is advantageous, if the unit 1 is electrically powered from its respective photovoltaic panel(s) 53. Other renewable sources can be used instead of photovoltaic panels; however, the use of solar energy is particularly advantageous for the needs of the ventilation unit. The photovoltaic panel (s) 53 may be located on the facade or roof structure of the building 60, but typically are not electrically connected to the electrical wiring in the building 60 and only supply power to the ventilation unit 1. Figure 5 shows direct supply of the ventilation unit 1 by means of at least one own photovoltaic panel 53. At least one dedicated photovoltaic panel 53 is through the power supply voltage adaptation module 54 connected to the control unit 51 or to control units 51. One power supply voltage adaptation module 54 can concurrently also serve a plurality of photovoltaic panels 53. The control unit 51 controls, inter alia, the electrical power of the thermoelectric modules in the active module 5 based on the actual power generation in photovoltaic panels 53. Also shown in Figure 5 is the interconnection of the functional components 52 of the ventilation unit 1 with the control unit 51. An interconnection with one control unit 51 is shown, however there may be a plurality of these control units 51. The functional components of the ventilation unit include all electrical or electromechanical components, including fans 38, 39, seasonal flaps 17 or air ducts 20, 36, 37 equipped with flaps or thermoelectric modules 40 in the active heat air exchangers 35.

The connection of the photovoltaic system 55 on the building 60 to the ventilation unit 1 is shown in Figure 6. The photovoltaic system 55 is interconnected in one branch with the electrical network 62 in building 60. The ventilation unit 1 is interconnected with the electrical network 62 in building 60 as well as the other electrical appliances 61 in the building 60. The electrical network 62 is concurrently interconnected with the distribution system 57 through a power overflow measuring instrument 58 for measuring energy overflows from the building 60 to the distribution system 57. The building 60 is equipped by a control system 59, which is on one end interconnected with the power overflow measuring instrument 58 and on the other end to the control unit 51 or control units 51. The building 60 can be provided with a plurality of ventilation units 1.

The energy flow information from the feeding energy measuring instrument 58 is transmitted to the control system 59 of the building 60, which when energy overflows to the distribution system 57 occur or under other advantageous conditions, controls the power of the installed ventilation units 1 in a manner to locally use all the energy generated by the photovoltaic system 55.

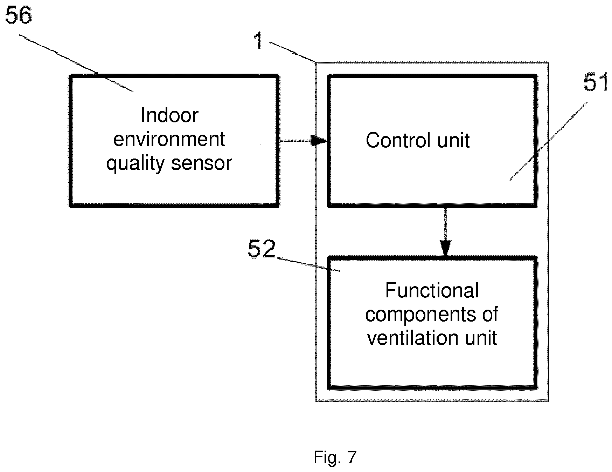

In this case, it is advantageous if the at least one control unit 51 is interconnected to at least one indoor environment quality sensor 56 as shown in Figure 7. In this case, the control unit 51 adjusts the required air flow by controlling the fans 38,39, the operation mode and the power required to heat or cool the air based on the measured parameters by the indoor environment quality sensor 56. The parameters measured by the indoor environment quality sensor 56 are, with an advantage, temperature, humidity, or carbon dioxide concentration.

The present ventilation unit 1 with the possibility of heating and cooling allows continuous control of the power for heating or cooling the air by controlling the electrical power of the thermoelectric modules 40 in the active module 5.

### Industrial Applicability

The ventilation unit with the possibility of heating and cooling with increased waste heat dissipation can be used in all buildings of an administrative and residential type. It can be easily integrated into existing buildings and new buildings. The unit can also be used for the ventilation of schools or other public buildings. The ventilation unit will find its use especially in the reconstruction of buildings, where the installation of the central air handling unit is too expensive, complicated or otherwise impossible or disadvantageous. Installation of the present ventilation unit does not require complex construction modifications. Only two openings are required, one for exhaust air output and the other for fresh air input. These openings can optionally be combined into a single opening or the openings can be placed in the window lining or below the windowsill.

The power supply of the unit can advantageously be combined with renewable energy sources, for example a photovoltaic system intended either for the ventilation unit only or with a central source installed anywhere in the building. The power of the units is then controlled according to the magnitude of detected energy feeded into the distribution system. This combination of a cooling unit powered wholly or partially from photovoltaic systems is very energy efficient because it allows maximum use of solar energy even in summer, where there is not much heating demand and local use is problematic, and the unused electric energy then overflows into the distribution system.

The unit combines the functions of active air handling and the cooling and heating of buildings. The mode change between cooling and heating is done by simply reversing the current in the thermoelectric modules and possibly adjusting the flaps. Thanks to cascade of the passive and active heat exchanger, it increases the efficiency of heat and cold recovery from the exhaust air.

In the configuration of the unit with a water-air heat exchanger, the unit can be connected to the existing heating water distribution and fully replaces radiators in the room using the existing heating system of the building.

The great advantage is the total absence of a compressor (mechanical) circuit and the possibility of configuring the total capacity of the unit using the number of active heat exchangers, where the number of these exchangers reflects the requirements for fresh air, depending on the number of people using the room or building.

### List of reference signs:

1 Ventilation unit
2 Exterior
3 Interior
4 Passive module (comprising in advantageous embodiments a primary passive heat air exchanger 30, or additionally a supplementary secondary passive air heat exchanger 29, or possibly more than two passive heat air exchangers)
INP1 First input of passive module
INP2 Second input of passive module
OUTP1 First output of passive module
OUTP2 Second output of passive module
5 Active module (comprising at least one active air heat exchanger 35)
6 Thermal modifier
INA1 First input of active module
INA2 Second input of active module
OUTA1 First output of active module
OUTA2 Second output active module
10 First air duct (for supplying fresh air from first output OUTP1 of passive module to first input of INA1 of active module 5)
11 Second air duct (for supplying additional air from the exterior 2 to first second input INA2 of active module 5 for more efficient cooling)
12 Third air duct (interconnecting directly or through passive module 4 output of first chamber 22 or first chambers 22 of active module 5 with output 34 of exhaust air to exterior 2 for removing exhaust air from active module 5 to exterior 2)
13 Fourth air duct (for drawing exhaust air from second output OUTP2 of passive module 4 to second INA2 of active module 5)
14 Ventilated gap
15 Air output to interior 3
16 Slot diffuser (to vent air from ventilated gap 14 to interior 3)
17 Seasonal flap
18 Cover (of ventilation unit 1)
19 Input of ventilated gap 14 (for drawing in air from interior 3)
20 Air duct of secondary passive exchanger bypass 29 with flap
22 First chamber (of active heat air exchanger 35)
22.1 First chamber 22 input
22.2 First chamber output 22
23 Second chamber (of active heat exchanger 35)
23.1 Input of second chamber 23
23.2 Output of second chamber 23
24 First heat exchange structure
25 Second heat exchange structure
26 Insulation material
28 Water-air heat exchanger
29 Secondary passive heat air exchanger
29.1 First internal branch of secondary passive heat air exchanger 29
29.2 Second internal branch of secondary passive heat air exchanger 29
30 Primary passive heat air exchanger
30.1 First internal branch of primary passive heat air exchanger 30
30.2 Second internal branch of primary passive heat air exchanger 30
30.IN1 First input of passive primary heat air exchanger 30
30.IN2 Second input of primary passive heat air exchanger 30
30.OUT1 First output of primary passive heat air exchanger 30
30.OUT2 Second output of primary passive heat air exchanger 30
31 Exhaust air input from interior 3
32 Fresh air input from exterior 2
34 Exhaust air output to exterior 2
35 Active heat air exchanger
36 Exterior air bypass air duct with first bypass flap
37 Interior air bypass air duct with second bypass flap
38 Exterior air fan
39 Interior air fan
40 Thermoelectric module
41 First surface of thermoelectric module 40
42 Second surface of thermoelectric module 40,
43 First temperature sensor of first cooler 24
44 Second temperature sensor of first cooler 24
45 First temperature sensor of second cooler 25
46 Second temperature sensor of second cooler 25
51 Control unit
52 Functional components of ventilation unit 1
53 Photovoltaic panel (s) (belonging to ventilation unit 1)
54 Power supply voltage adaptation module
55 Photovoltaic system
56 Indoor environment quality sensor
57 Distribution system (grid)
58 Electricity meter to measure power feeded to distribution 57
59 Building automation control system 60
60 Building
61 Other electrical appliances in building 60 (excluding ventilation unit (s) 1)
62 Electrical network in building 60

## Claims

1. A ventilation unit (1) with increased waste heat dissipation, with possibility of heating and/or cooling of a building (60) having an interior (3) and an exterior (2), comprising at least one fresh air input (32) from exterior (2) and at least one input (31) of exhaust air from interior (3) and comprising a passive module (4) containing at least one passive heat air exchanger (29, 30), where this passive module (4) has at least two inputs comprising a first input (INP1) and a second input (INP2), and at least two outputs comprising a first output (OUTP1) and a second output (OUTP2), and an active module (5) comprising at least one active heat air exchanger (35), where this active module (5) has at least two inputs comprising the first input (INP1) and the second input (INP2), and at least two outputs comprising the first output (OUTP1) and the second output (OUTP2), wherein the passive module (4) is
at its first input (INP1) connected to at least one of fresh air inputs (32) from exterior (2) and
at its second input (INP2) connected to at least one of inputs (31) of exhaust air from interior (3) and
its first output (OUTP1) is interconnected with a first input (INA1) of the active module (5) and
its second output (OUTP2) is interconnected with a second input (INA2) of the active module (5),
wherein each active heat exchanger (35) comprises at least one heat modifier (6) and two separate chambers comprising first chamber (22) and second chamber (23), wherein each first chamber (22) of each active heat air exchanger (35) has a first chamber input (22.1) and a first chamber output (22.2) and each second chamber (23) of said active heat air exchanger (35) has a second chamber input (23.1) and a second chamber output (23.2), wherein further the input (22.1) of at least one first chamber (22) is directly or via other elements interconnected with the second input (INA2) of the active module (5) and
the output (22.2) of at least one first chamber (22) is directly or through other elements interconnected with at least one exhaust air output (34) to the exterior (2) and wherein the input (23.1) of at least one second chamber (23) is interconnected directly or via other elements with the first input (INA1) of the active module (5) and
the output (23.2) of at least one second chamber (23) is directly or via other elements interconnected with at least one air output (15) to the interior (3)
**characterized in that** the ventilation unit (1) is equipped with a second air duct (11) for supplying additional air from the exterior (2) which is interconnected at its first end with at least one fresh air input (32) from the exterior (2) and at its second end interconnected to a second input (INA2) of the active module (5).

2. The ventilation unit (1) according to claim 1, **characterized in that** the second air duct (11) for supplying additional air from the exterior (2) is fitted with a seasonal flap (17) for closing the air duct (11) in the winter heating mode and for its opening in the cooling mode during the summer season.

3. The ventilation unit (1) according to any of claims 1 or 2, **characterized in that** the passive module (4) comprises a secondary passive heat air exchanger (29) having a first internal branch (29.1) and a second internal branch (29.2), and a primary passive heat air exchanger (30) having a first internal branch (30.1) connecting its first input (30.IN1) to its first output (30.0UT1) and a second internal branch (30.2) connecting its second input (30.IN2) to its second output (30.OUT2), wherein
- the output (22.2) of the at least one first chamber (22) of at least one active exchanger (35) is interconnected with at least one exhaust air output (34) to the exterior (2) via the second internal branch (29.2) of the secondary passive heat air exchanger (29) and wherein
- at least one fresh air input (32) from the exterior (2) and the first input (INP1) of the passive module (4) interconnected thereto are interconnected with the first input (30.IN1) of the primary passive heat exchanger (30) via the first internal branch (29.1) of the secondary passive air exchanger (29), wherein this first input (30.IN1) of the primary passive heat exchanger (30) is further interconnected through the first internal branch (30.1) of this primary passive heat exchanger (30) with its first output (30.0UT1), which is interconnected with the first output (OUTP1) of the passive module (4),
- wherein additionally the second input (30.IN2) of the primary passive heat air exchanger (30) is interconnected on one side with the second input (INP2) of the passive module (4) and on the other side it is also via the second internal branch (30.2) of the primary passive thermal air heat exchanger (30) interconnected with its second output (30.OUT2)
- this second output (30.OUT2) of the primary passive heat air exchanger (30) is interconnected with the second output (OUTP2) of the passive module (4).

4. The ventilation unit (1) according to any of claims 1 to 3, **characterized in that** the output (23.2) of the at least one second chamber (23) is interconnected with at least one air output (15) to the interior (3) via a water-air heat exchanger (28), which is connected to a standard hot-water heating system of the building (60).

5. The ventilation unit (1) according to any of claims 1 to 4, **characterized in that** it is equipped with a cover (18) in such a manner that between this cover (18) and at least one second chamber (23) of at least one active exchanger (35), a ventilated gap (14) exists at least along a part of the outer wall of the second chamber (23) having an input (19) for drawing air from the interior (3) at one end and an slot diffuser (16) output for blowing air into the interior (3) at the opposite end, wherein the slot diffuser (16) opens into the mouth of the second chamber (23) before the output (23.2) of this second chamber (23).

6. The ventilation unit (1) according to any of claims 1 to 5, **characterized in that** it further comprises an exterior air bypass air duct (36) fitted with the first bypass flap and an interior air bypass air duct (37) fitted with the second bypass flap for internal circulation of interior air between at least one exhaust air input (31) from the interior (3) and at least one air output (15) to the interior (3) via the second chamber (23) or, in the case of multiple active heat air exchangers (35), through multiple second chambers (23) without supplying the exterior air to this second chamber (23) or to these second chambers (23).

7. The ventilation unit (1) according to any of claims 1 to 6, **characterized in that** at least one indoor environment quality sensor (56) is located in the building (60), with at least one of these indoor environment quality sensors being interconnected directly or through other elements to the ventilation unit (1).

8. The ventilation unit (1) according to any of claims 1 to 7, **characterized in that** at least one thermal modifier (6) comprising a first heat exchange structure (24) positioned in the first chamber (22) and a second heat exchange structure (25) in the second chamber (23), the first chamber (22) and the second chamber (23) being located in the same active heat air exchanger (35), comprising said thermal modifier (6), and between the first heat exchange structure (24) and the second heat exchange structure (25) at least one thermoelectric module (40) is inserted, wherein the ventilation unit (1) additionally comprises at least one control unit (51) and each thermoelectric module (40) is connected to one of the control units (51).

9. The ventilation unit (1) according to claim 8, **characterized in that** each of the heat exchange structures (24, 25) between which at least one thermoelectric module (40) is inserted, is equipped with at least one sensor (43, 44, 45, 46) for measuring temperature, with all these sensors being connected to the same control unit (51) as the thermoelectric modules (40) located between the heat exchange structures (24, 25) equipped with these sensors.

10. The ventilation unit (1) according to claims 8 or 9, **characterized in that** the individual thermoelectric modules (40) are connected to sections connected to mutually separate control circuits within one control unit (51) or each section is connected to an independent control unit (51).

11. The ventilation unit (1) according to any of claims 8 to 10, **characterized in that** a photovoltaic system (55) is located in the exterior (2), which is interconnected in one branch with electrical network (62) in the building (60), to which are connected the ventilation units (1) and other electrical appliances (61) in the building (60), the electrical network (62) of building (60) being interconnected with distribution system? (57) through a grid feeding power measurement instrument? (58) and wherein the building (60) is additionally equipped with a control system (59) which is interconnected on one side to the grid (57) feeding power measurement instrument? (58) and on the other side to the control units (51).

12. The ventilation unit (1) according to claim 7 and any of claims 8 to 11, **characterized in that** the at least one control unit (51) is interconnected with at least one indoor environment quality sensor (56).

## Patentansprüche

1. Lüftungseinheit (1) mit erhöhter Abwärmeabfuhr mit der Möglichkeit vom Heizen und/oder Kühlen eines Objekts (60) mit Interieur (3) und Exterieur (2), die mindestens einen Einlass (32) für Frischluft aus dem Exterieur (2) und mindestens einen Einlass (31) für Abluft aus dem Interieur (3) umfasst und ein Passivmodul (4) umfasst, das mindestens einen passiven Luftwärmetauscher (29, 30) enthält, wobei dieses Passivmodul (4) mindestens zwei Eingänge hat, einen ersten Eingang (INP1) und einen zweiten Eingang (INP2), und mindestens zwei Ausgänge, einen ersten Ausgang (OUTP1) und einen zweiten Ausgang (OUTP2), und ein aktives Modul (5), das mindestens einen aktiven Luftwärmetauscher (35) umfasst, wobei dieses aktive Modul (5) mindestens zwei Eingänge hat, einen ersten Eingang (INP1) und einen zweiten Eingang (INP2) und mindestens zwei Ausgänge, einen ersten Ausgang (OUTP1) und einen zweiten Ausgang (OUTP2), wobei das passive Modul (4)
an seinem ersten Eingang (INP1) mit mindestens einem der Einlässe (32) für Frischluft aus dem Exterieur (2) verbunden ist und
an seinem zweiten Eingang (INP2) mit mindestens einem der Einlässe (31) für Abluft aus dem Interieur (3) verbunden ist und
sein erster Ausgang (OUTP1) mit dem ersten Eingang (INA1) des aktiven Moduls (5) verbunden ist und
sein zweiter Ausgang (OUTP2) mit dem zweiten Eingang (INA2) des aktiven Moduls (5) verbunden ist,
wobei jeder aktiver Luftwärmetauscher (35) mindestens einen Wärmemodifikator (6) und zwei getrennte Kammern umfasst, eine erste Kammer (22) und eine zweite Kammer (23), wobei jede erste Kammer (22) jedes aktiven Luftwärmetauschers (35) einen Eingang (22.1) der ersten Kammer und einen Ausgang (22.2) der ersten Kammer hat und jede zweite Kammer (23) des aktiven Luftwärmetauschers (35) einen Eingang (23.1) der zweiten Kammer und einen Ausgang (23.2) der zweiten Kammer hat, wobei weiterhin
der Eingang (22.1) mindestens einer ersten Kammer (22) direkt oder über andere Elemente mit dem zweiten Eingang (INA2) des aktiven Moduls (5) verbunden ist und
der Ausgang (22.2) mindestens einer ersten Kammer (22) direkt oder über andere Elemente mit mindestens einem Ausgang (34) der Abluft ins Exterieur (2) verbunden ist, und wobei
der Eingang (23.1) mindestens einer zweiten Kammer (23) direkt oder über andere Elemente mit dem ersten Eingang (INA1) des aktiven Moduls (5) verbunden ist und
der Ausgang (23.2) mindestens einer zweiten Kammer (23) direkt oder über andere Elemente mit mindestens einem Ausgang (15) der Luft ins Interieur (3) verbunden ist
**gekennzeichnet dadurch, dass** die Lüftungseinheit (1) mit einem zweiten Luftkanal (11) für die Zufuhr von zusätzlicher Luft vom Exterieur (2) ausgestattet ist, der an seinem ersten Ende mit mindestens einem Einlass (32) für Frischluft aus dem Exterieur (2) und an seinem zweiten Ende mit dem zweiten Eingang (INA2) des aktiven Moduls (5) verbunden ist.

2. Lüftungseinheit (1) nach Anspruch 1, **gekennzeichnet dadurch, dass** der zweite Luftkanal (11) für die Zufuhr von zusätzlicher Luft vom Exterieur (2) mit einer Saisonklappe (17) zum Verschließen des Luftkanals (11) im Heizbetrieb in der Wintersaison und zum Öffnen im Kühlbetrieb in der Sommersaison ausgestattet ist.

3. Lüftungseinheit (1) nach einem der Ansprüche 1 oder 2, **gekennzeichnet dadurch, dass** das Passivmodul (4) einen sekundären passiven Luftwärmetauscher (29) mit einem ersten internen Zweig (29.1) und einem zweiten internen Zweig (29.2) umfasst, und einen primären passiven Luftwärmetauscher (30) mit einem ersten internen Zweig (30.1), der seinen ersten Eingang (30.IN1) mit seinem ersten Ausgang (30.0UT1) verbindet, und einem zweiten internen Zweig (30.2), der seinen zweiten Eingang (30.IN2) mit seinem zweiten Ausgang (30.OUT2) verbindet, wobei
- der Ausgang (22.2) mindestens einer ersten Kammer (22) mindestens eines aktiven Luftwärmetauschers (35) mit mindestens einem Auslass (34) der Abluft ins Exterieur (2) über den zweiten internen Zweig (29.2) des sekundären passiven Luftwärmetauschers (29) verbunden ist und wobei
- mindestens ein Einlass (32) für Frischluft aus dem Exterieur (2) und der mit ihm verbundene Eingang (INP1) des Passivmoduls (4) mit dem ersten Eingang (30.IN1) des primären passiven Luftwärmetauschers (30) über den ersten internen Zweig (29.1) des sekundären passiven Luftwärmetauschers (29) verbunden sind, wobei dieser erste Eingang (30.IN1) des primären passiven Luftwärmetauschers (30) weiterhin über den ersten internen Zweig (30.1) dieses primären passiven Luftwärmetauschers (30) mit seinem ersten Ausgang (30.0UT1) verbunden ist, der mit dem ersten Ausgang (OUTP1) des Passivmoduls (4) verbunden ist,
- wobei weiterhin der zweite Eingang (30.IN2) des primären passiven Luftwärmetauschers (30) einerseits mit dem zweiten Eingang (INP2) des Passivmoduls (4) verbunden ist und andererseits auch über den zweiten internen Zweig (30.2) des primären passiven Luftwärmetauschers (30) mit seinem zweiten Ausgang (30.OUT2) verbunden ist
- dieser zweite Ausgang (30.OUT2) des primären passiven Luftwärmetauschers (30) ist mit dem zweiten Ausgang (OUTP2) des Passivmoduls (4) verbunden.

4. Lüftungseinheit (1) nach einem der Ansprüche 1 bis 3, **gekennzeichnet dadurch, dass** der Ausgang (23.2) mindestens einer zweiten Kammer (23) mit mindestens einem Ausgang (15) der Luft ins Interieur (3) über einen Wärmetauscher (28) Wasser-Luft verbunden ist, der an das standardmäßige Warmwasser-Heizsystem eines Objektes (60) angeschlossen ist.

5. Lüftungseinheit (1) nach einem der Ansprüche 1 bis 4, **gekennzeichnet dadurch, dass** sie mit einer Abdeckung (18) versehen ist, sodass sich zwischen dieser Abdeckung (18) und mindestens einer zweiten Kammer (23) mindestens eines aktiven Luftwärmetauschers (35) mindestens entlang eines Teils der Außenwand der zweiten Kammer (23) ein Belüftungsspalt (14) befindet, der einen Einlass (19) zum Ansaugen von Luft vom Interieur (3) an einem Ende und einen Auslass durch den Spalt (16) zum Einblasen von Luft ins Interieur (3) am anderen Ende aufweist, wobei der Spalt (16) vor dem Ausgang (23.2) der zweiten Kammer (23) in diese zweite Kammer (23) mündet.

6. Lüftungseinheit (1) nach einem der Ansprüche 1 bis 5, **gekennzeichnet dadurch, dass** sie ferner einen Bypass-Luftkanal (36) der Außenluft umfasst, der mit einer ersten Bypassklappe versehen ist, und einen Bypass-Luftkanal (37) der Innenluft umfasst, der mit einer zweiten Bypassklappe zur internen Zirkulation von Innenraumluft zwischen mindestens einem Einlass (31) für Abluft aus dem Interieur (3) und mindestens einem Auslass (15) der Luft ins Interieur (3) über die zweite Kammer (23) oder bei mehreren aktiven Luftwärmetauschern (35) über mehrere zweite Kammern (23) ohne Zufuhr der Außenluft in diese zweite Kammer (23) oder diese zweite Kammern (23) versehen ist.

7. Lüftungseinheit (1) nach einem der Ansprüche 1 bis 6, **gekennzeichnet dadurch, dass** im Objekt (60) mindestens ein Sensor (56) der Innenraumqualität angeordnet ist, wobei mindestens einer dieser Sensoren der Innenraumqualität direkt oder über andere Teile mit der Lüftungseinheit (1) verbunden ist.

8. Lüftungseinheit (1) nach einem der Ansprüche 1 bis 7, **gekennzeichnet dadurch, dass** mindestens ein Wärmemodifikator (6) eine erste Wärmeaustauschstruktur (24) umfasst, die in der ersten Kammer (22) angeordnet ist, und eine zweite Wärmeaustauschstruktur (25), die in der zweiten Kammer (23) angeordnet ist, wobei diese erste Kammer (22) und diese zweite Kammer (23) in demselben aktiven Luftwärmetauscher (35) angeordnet sind, dessen Teil der angegebene Wärmemodifikator (6) ist, und zwischen der ersten Wärmeaustauschstruktur (24) und der zweiten Wärmeaustauschstruktur (25) ist mindestens ein thermoelektrisches Modul (40) angeordnet, wobei die Lüftungseinheit (1) ferner mindestens eine Steuereinheit (51) umfasst und jedes thermoelektrische Modul (40) mit einer der Steuereinheiten (51) verbunden ist.

9. Lüftungseinheit (1) nach Anspruch 8, **gekennzeichnet dadurch, dass** jede der Wärmeaustauschstrukturen (24, 25), zwischen denen mindestens ein thermoelektrisches Modul (40) angeordnet ist, mit mindestens einem Sensor (43, 44, 45, 46) zur Temperaturmessung ausgestattet ist, wobei alle diese Sensoren mit derselben Steuereinheit (51) als thermoelektrische Module (40) verbunden sind, die sich zwischen den mit diesen Sensoren ausgestatteten Wärmeaustauschstrukturen (24, 25) befinden.

10. Lüftungseinheit (1) nach Anspruch 8 oder 9, **gekennzeichnet dadurch, dass** die einzelnen thermoelektrischen Module (40) in Sektionen verbunden sind, die an getrennte Regelkreise im Rahmen einer Steuereinheit (51) angeschlossen sind, oder jede Sektion an eine separate Steuereinheit (51) angeschlossen ist.

11. Lüftungseinheit (1) nach einem der Ansprüche 8 bis 10, **gekennzeichnet dadurch, dass** im Exterieur (2) eine Photovoltaikanlage (55) angeordnet ist, die in einem Zweig an das Stromnetz (62) im Objekt (60) angeschlossen ist, an das die Lüftungseinheiten (1) und andere Elektrogeräte (61) im Objekt (60) angeschlossen sind, wobei das Stromnetz (62) des Objektes (60) mit dem Verteilernetz (57) über eine Vorrichtung (58) zum Messen von Energierückfluss in das Verteilernetz (57) verbunden ist, und wobei ferner das Objekt (60) mit einem Steuersystem (59) ausgestattet ist, das einerseits mit der Vorrichtung (58) zum Messen von Energierückfluss in das Verteilernetz (57) und andererseits mit den Steuereinheiten (51) verbunden ist.

12. Lüftungseinheit (1) nach Anspruch 7 und einem der Ansprüche 8 bis 11, **gekennzeichnet dadurch, dass** mindestens eine Steuereinheit (51) mit mindestens einem Sensor (56) der Innenraumqualität verbunden ist.

## Revendications

1. L'unité (1) de ventilation avec une évacuation augmentée de la chaleur perdue avec possibilité de chauffer et/ou de refroidir un bâtiment (60) ayant un intérieur (3) et un extérieur (2), qui comprend au moins une entrée (32) d'air frais de l'extérieur (2) et au moins une entrée (31) d'air perdu de l'intérieur (3) et qui comprend un module (4) passif contenant au moins un échangeur (29, 30) de chaleur à air passif où ce module (4) passif est doté d'au moins deux entrées comprenant la première entrée (INP1) et la deuxième entrée (INP2) et au moins deux sorties comprenant une première sortie (OUTP1) ou une deuxième sortie (OUTP2) et un module (5) actif contenant au moins un échangeur (35) de chaleur à air actif où ce module (5) actif est doté d'au moins deux entrées comprenant une première entrée (INP1) et une deuxième entrée (INP2) et au moins deux sorties comprenant une première sortie (OUTP1) et une deuxième sortie (OUTP2), le module (4) passif étant raccordé
sur sa première entrée (INP1) à au moins une des entrées (32) d'air frais de l'extérieur (2) et
sur sa deuxième entrée (INP2) à au moins une des entrées (31) d'air perdu de l'intérieur (3) et
sa première sortie (OUTP1) est interconnectée à la première entrée (INA1) du module actif (5) et
sa deuxième sortie (OUTP2) est interconnectée à la deuxième entrée (INA2) du module actif (5),
chaque échangeur (35) de chaleur à air actif contenant au moins un modificateur (6) de chaleur et deux chambres séparées comprenant une première chambre (22) et une deuxième chambre (23), chaque première chambre (22) de chaque échangeur (35) de chaleur à air actif étant dotée d'une entrée (22.1) de la première chambre et d'une sortie (22.2) de la première chambre et chaque deuxième chambre (23) d'un échangeur de chaleur à air actif donné étant dotée d'une entrée (23.1) de la deuxième chambre et d'une sortie (23.2) de la deuxième chambre, en outre
l'entrée (22.1) d'au moins une première chambre (22) étant interconnectée directement via d'autres éléments avec la deuxième entrée (INA2) du module (5) actif et
la sortie (22.2) d'au moins une première chambre (22) étant interconnectée directement via d'autres éléments avec au moins une sortie (34) d'air perdu vers l'extérieur (2) et
l'entrée (23.1) d'au moins une deuxième chambre (23) étant interconnectée directement via d'autres éléments avec la première entrée (INA1) du module (5) actif et
la sortie (23.2) d'au moins une deuxième chambre (23) étant interconnectée directement via d'autres éléments avec au moins une entrée (15) d'air vers l'intérieur (3)
**caractérisé en ce que** l'unité (1) de ventilation est équipée d'un deuxième conduit (11) d'air pour amener l'air supplémentaire de l'extérieur (2) qui est interconnecté à sa première extrémité avec au moins une entrée (32) d'air frais de l'extérieur (2) et à sa deuxième extrémité avec la deuxième entrée (INA2) du module (5) actif.

2. L'unité (1) de ventilation selon la revendication 1 **caractérisée en ce que** le deuxième conduit d'air (11) d'arrivée d'air supplémentaire de l'extérieur (2) est équipé d'un clapet (17) saisonnier pour fermer le conduit (11) d'air en mode chauffage en saison hivernale et pour l'ouvrir en mode de refroidissement en saison estivale.

3. L'unité (1) de ventilation selon l'une quelconque des revendications 1 ou 2 **caractérisée en ce que** le module (4) passif comprend un échangeur (29) de chaleur à air passif secondaire ayant une première branche (29.1) interne et une deuxième branche (29.2) interne et un échangeur (30) de chaleur à air passif primaire ayant une première branche (30.1) interne reliant sa première entrée (30.IN1) à sa première sortie (30.0UT1) et la deuxième branche (30.2) interne reliant sa deuxième entrée (30.IN2) à sa deuxième sortie (30.OUT2),
- la sortie (22.2) d'au moins une première chambre (22) d'au moins un échangeur actif (35) étant interconnectée avec au moins une sortie (34) d'air perdu vers l'extérieur (2) via la deuxième branche (29.2) de l'échangeur de chaleur à air passif secondaire (29) et
- au moins une sortie (32) d'air frais de l'extérieur (2) et une première entrée (INP1) du module (4) passif interconnectée avec cette sortie étant interconnectées avec la première entrée (30.IN1) de l'échangeur (30) de chaleur primaire passif via la première branche (29.1) intérieure de l'échangeur (29) d'air passif secondaire lorsque cette première entrée (30.IN1) de l'échangeur de chaleur passif primaire (30) est en outre interconnectée à travers la première branche (30.1) intérieure de cet échangeur (30) de chaleur à air passif primaire avec sa première sortie (30.1) du module (4) passif,
- de plus, la deuxième entrée (30.IN2) de l'échangeur (30) de chaleur à air passif primaire étant interconnectée d'une part avec la deuxième entrée (INP2) du module (4) passif et d'autre part interconnectée également via la deuxième branche (30.2) intérieure de l'échangeur (30) de chaleur à air passif primaire avec sa deuxième sortie (30.OUT2)
- cette deuxième sortie (30.OUT2) de l'échangeur (30) de chaleur à air passif primaire est interconnectée avec la deuxième sortie (OUTP2) du module (4) passif.

4. L'unité (1) de ventilation selon l'une quelconque des revendications 1 à 3 **caractérisée en ce que** la sortie (23.2) d'au moins une deuxième chambre (23) est interconnectée avec au moins une sortie (15) d'air vers l'intérieur (3) via l'échangeur de chaleur (28) eau-air qui est relié au système de chauffage à eau chaude standard du bâtiment (60).

5. L'unité (1) de ventilation selon l'une quelconque des revendications 1 à 4 **caractérisée en ce que** celle-ci est équipée d'une cache (18) de manière qu'entre cette cache (18) et au moins une deuxième chambre (23) d'au moins un échangeur (35) actif se trouve, au moins le long d'une partie de la paroi extérieure de la deuxième chambre (23), un espace (14) ventilé ayant une entrée (19) d'aspiration d'air de l'intérieur (3) à une extrémité et une sortie à travers une fente (16) pour souffler l'air vers l'intérieur (3) à l'extrémité opposée, la fente (16) débouchant dans la bouche de la deuxième chambre (23) avant la sortie (23.2) de cette deuxième chambre (23).

6. L'unité (1) de ventilation selon l'une quelconque des revendications 1 à 5 **caractérisée en ce qu'**elle comprend de plus un conduit (36) d'air de la dérivation de l'air extérieur équipé d'un premier clapet de dérivation et un conduit (37) d'air de la dérivation de l'air intérieur équipé d'un deuxième clapet de dérivation pour la circulation interne de l'air intérieur entre au moins une entrée (31) d'air perdu de l'intérieur (3) et au moins une sortie (15) d'air vers l'intérieur (3) via la deuxième chambre (23) ou en cas de plusieurs échangeurs (35) de chaleur à air actifs via plusieurs deuxièmes chambres (23) sans arrivée de l'air extérieur dans cette deuxième chambre (23) ou dans ces deuxièmes chambres (23).

7. L'unité (1) de ventilation selon l'une quelconque des revendications 1 à 6 **caractérisée en ce que** dans le bâtiment (60), au moins un capteur (56) de qualité du milieu intérieur est placé, au moins un de ces capteurs de qualité du milieu intérieur étant interconnecté directement ou via d'autres organes avec l'unité (1) de ventilation.

8. L'unité (1) de ventilation selon l'une quelconque des revendications 1 à 3 **caractérisée en ce qu'**au moins un modificateur (6) de chaleur comprend une première structure (24) d'échange de chaleur située dans la première chambre (22) et une deuxième structure (25) d'échange de chaleur située dans la deuxième chambre (23), la première chambre (22) et la deuxième chambre (23) étant situées dans le même échangeur (35) de chaleur à air actif dont ledit modificateur (6) de chaleur fait partie, et au moins un module (40) thermoélectrique est inséré entre la première structure (24) d'échange de chaleur et la deuxième structure (25) d'échange de chaleur, l'unité (1) de ventilation contenant de plus au moins une unité (51) de commande et chaque module (40) thermoélectrique étant raccordé à l'une des unités (51) de commande.

9. L'unité (1) de ventilation selon la revendication 8 **caractérisée en ce que** chacune des structures (24, 25) d'échange de chaleur entre lesquelles au moins un module (40) thermoélectrique est inséré est équipée d'au moins un capteur (43, 44, 45, 46) pour mesurer la température, tous ces capteurs étant raccordés à la même unité (51) de commande comme les modules (40) thermoélectriques se trouvant entre les structures (24,25) d'échange de chaleur équipées de ces capteurs.

10. L'unité (1) de ventilation selon la revendication 8 ou 9 **caractérisée en ce que** les différents modules (40) thermoélectriques sont reliés à des sections qui sont raccordées aux circuits de commande séparés mutuellement dans le cadre d'une unité (51) de commande ou chaque section est raccordée à une unité (51) de commande indépendante.

11. L'unité (1) de ventilation selon l'une quelconque des revendications 8 à 10 **caractérisée en ce qu'à** l'extérieur (2), un système (55) photovoltaïque qui est connecté, dans une branche, au réseau (62) électrique dans le bâtiment (60) auquel les unités (1) de ventilation et les autres appareils (61) électriques dans le bâtiment (60) sont raccordés, le réseau (62) électrique du bâtiment (60) étant relié au système (57) de distribution via un dispositif (58) de mesure des flux d'énergie vers le système (57) de distribution et de plus le bâtiment (60) étant équipé d'un système (59) de commande qui est interconnecté d'une part avec le dispositif (58) de mesure des flux d'énergie vers le système (57) de distribution et d'autre par avec les unités (51) de commande.

12. L'unité (1) de ventilation selon la revendication 7 et l'une quelconque des revendications 8 à 11 **caractérisé en ce qu'au** moins une unité (51) de commande est interconnectée avec au moins un capteur (56) de qualité du milieu interne.
